# FASCICULE DE BREVET EUROPEEN

(11) **EP 0 509 879 B1**
(45) Date de publication et mention de la délivrance du brevet: **14.12.1994**
(21) Numéro de dépôt: 92400979.8
(22) Date de dépôt: 08.04.1992
(51) Int. Cl.: B60T 17/18, B61H 5/00, B60T 1/06, F16D 63/00, F16D 55/10

(54) **Dispositif de freinage à disques multiples**
Lamellenscheibenbremsanlage
Braking device using multiple discs

(30) Priorité: 19.04.1991 FR 9104849
(43) Date de publication de la demande: 21.10.1992
(73) Titulaire: AEROSPATIALE Société Nationale Industrielle, 75781 Paris Cédex 16 (FR)
(72) Inventeur: Chareire, Jean-Louis, F-92300 Levallois Perret (FR)
(74) Mandataire: Bonnetat, Christian

(56) Documents cités:
- DE-A- 2 026 478
- DE-A- 2 812 643
- GB-A- 679 667
- GB-A- 2 197 924
- US-A- 5 072 811

## Description

La présente invention concerne un dispositif de freinage à disques multiples pour des véhicules pourvus de ralentisseurs de freinage.

Quoique non exclusivement, le dispositif de freinage selon l'invention est plus particulièrement destiné a des véhicules ferroviaires, dénommés ci-après trains et équipés dans ce cas de dispositifs de ralentissement électriques (par les moteurs de traction).

On sait en effet que le freinage d'un train de ce type est obtenu par la mise en oeuvre successivement d'un dispositif à ralentisseur électrique et d'un dispositif à friction. Aussi, pour stopper un train, le ralentisseur est tout d'abord actionné afin de provoquer le ralentissement du train jusqu'à une vitesse donnée, relativement basse, puis, lorsque le train a atteint cette vitesse pour laquelle le ralentisseur électrique devient inefficace, le dispositif à friction est à son tour actionné jusqu'à l'arrêt total du train.

Le freinage est effectué en grande partie par le ralentisseur électrique, puisqu'on estime que l'énergie à stocker dans les disques du dispositif à friction n'atteint pas 3% de l'énergie totale à fournir.

Toutefois, malgré la faible participation au freinage du dispositif à disques et à cause des normes de sécurité imposées, les disques multiples du dispositif de freinage doivent être dimensionnés de façon à pouvoir assurer le freinage et l'arrêt du train en cas de défaillance du ralentisseur électrique. Aussi, l'énergie considérable qu'il est alors nécessaire d'absorber par le dispositif à disques multiples, lors d'un dysfonctionnement du ralentisseur électrique, peut conduire au choix du carbone comme matériau de freinage pour les disques, à la place des disques usuellement réalisés en métal (par exemple en acier dont certains sont pourvus de garnitures de friction) en raison notamment de sa grande chaleur spécifique et de sa tenue à température élevée.

Néanmoins, un tel dispositif de freinage à disques en carbone implique un coût d'entretien élevé. De plus, les performances à l'usure de ces disques utilisés dans cette application ferroviaire ne sont que moyennes. En effet, le choix du carbone est surtout souhaitable lors de freinages requérant des énergies importantes à absorber, c'est-à-dire, dans la présente application, dans les cas de défaillance du ralentisseur électrique, ce qui est relativement rare. La plupart des freinages, dans lesquels intervient le dispositif à disques, nécessitent de n'absorber que de faibles énergies, ce pour quoi le carbone est d'une efficacité moyenne, alors que les disques en métal offrent une efficacité équivalente à coût très inférieur.

La présente invention a pour but de remédier à ces inconvénients et concerne un dispositif de freinage à disques multiples alliant les avantages spécifiques procurés par des disques en métal et en carbone, afin de garantir un freinage optimal dans tous les cas d'utilisation.

A cet effet, le dispositif de freinage à disques multiples pour véhicule, notamment ferroviaire, équipé d'un ralentisseur de freinage, est remarquable selon l'invention en ce qu'il comprend au moins :
- un premier ensemble de disques réalisés en une matière métallique et dont au moins certains sont solidaires en rotation d'un élément rotatif dudit véhicule ;
- des premiers moyens de pression susceptibles d'agir sur le premier ensemble de disques, et liés à un élément fixe dudit véhicule ;
- un second ensemble de disques réalisés en carbone et dont au moins certains sont solidaires en rotation dudit élément rotatif ;
- des seconds moyens de pression susceptibles d'agir sur le second ensemble de disques, et liés audit élément fixe du véhicule ;
- des moyens pour commander l'actionnement desdits premiers moyens de pression dès que le véhicule, freiné par le ralentisseur, atteint une vitesse limite imposée ; et,
- des moyens pour détecter une anomalie de fonctionnement dudit ralentisseur et solliciter les seconds moyens de pression.

Ainsi, grâce à l'invention, les ensembles de disques n'interviennent que dans leur utilisation respective la plus performante. Par exemple, lors d'un freinage du véhicule par le ralentisseur, seul le premier ensemble de disques métalliques est actionné, dès que le véhicule atteint la vitesse limite imposée. Le second ensemble de disques en carbone n'intervient pas et donc ne s'use pas. En revanche, dans le cas d'une défaillance du ralentisseur à une vitesse élevée du véhicule, supérieure à la vitesse limite, le second ensemble de disques en carbone est immédiatement sollicité et permet le freinage du véhicule jusqu'à son arrêt, grâce aux performances intrinsèques du carbone. Aussi, dès que le véhicule freiné alors par le second ensemble de disques en carbone atteint la vitesse limite, le premier ensemble de disques métalliques peut éventuellement intervenir et participer ainsi à l'arrêt du véhicule.

On voit donc que le dispositif conforme à la présente invention met en oeuvre une solution mixte de freinage (disques métalliques et disques en carbone) permettant d'utiliser à bon escient chaque ensemble dont les performances optimales ne correspondent pas aux mêmes conditions d'emploi. Cette solution mixte de freinage offerte par le dispositif de l'invention est favorable aussi bien en ce qui concerne les coûts, la masse ou l'encombrement que la gestion de l'énergie et la puissance de freinage. Elle est donc particulièrement applicable aux véhicules ferroviaires et dans une moindre mesure aux camions poids lourds.

En raison de la très grande disproportion des énergies cinétiques qu'ils peuvent avoir à absorber, la masse des disques métalliques est inférieure à la masse totale des disques de carbone. Le gain en masse est donc presqu'aussi grand que si tous les disques étaient en carbone.

Le nombre des disques métalliques est également généralement plus faible que celui des disques de carbone. Toutefois, ce nombre doit rester suffisant pour que l'arrêt du train ne nécessite pas le recours à une force exagérée exercée par lesdits premiers moyens de pression.

Avantageusement, lesdits premiers et seconds moyens de pression sont montés sur un même support solidaire dudit élément fixe, réduisant la masse dudit dispositif et simplifiant sa conception. Plus particulièrement, lesdits premier et second ensembles de disques sont respectivement disposés de part et d'autre dudit support.

Dans un mode de réalisation préféré, les disques de chaque ensemble sont liés alternativement à l'élément rotatif et à l'élément fixe et sont susceptibles, sous l'action de leurs moyens de pression respectifs, de coulisser axialement pour s'appliquer les uns contre les autres.

Aussi, lesdits premier et second ensembles de disques sont logés dans des carters respectifs reliés audit élément fixe, et lesdits disques des premier et second ensembles sont axialement montés sur des clavettes respectivement prévues sur les carters solidaires de l'élément fixe et sur un moyeu solidaire dudit élément rotatif. Dans ce montage, les deux carters sont fixés respectivement de part et d'autre dudit support des premiers et seconds moyens de pression, ledit carter du second ensemble de disques en carbone étant solidaire dudit élément fixe et étant traversé par l'élément rotatif, contrairement au carter du premier ensemble de disques métalliques.

Par ailleurs, lesdits premiers et seconds moyens de pression sont définis par des vérins dont les pistons sont susceptibles d'agir respectivement sur les premier et second ensembles de disques. Dans ce cas, lesdits vérins sont, de préférence, alternativement et équi-angulairement répartis par rapport audit support.

Selon une autre caractéristique du dispositif, lesdits premiers moyens de pression sont susceptibles d'agir sur le second ensemble de disques en carbone en cas de défaillance de fonctionnement desdits seconds moyens de pression, des moyens de détection étant prévus pour déceler ladite défaillance et autoriser la commande desdits premiers moyens de pression à une vitesse supérieure à la vitesse limite imposée. Ainsi, la sécurité de fonctionnement conférée par le dispositif de l'invention est-elle encore accrue.

Dans ce cas, chaque vérin desdits premiers moyens de pression peut comprendre :
- une chemise intermédiaire, en forme de piston, susceptible d'agir contre les disques en carbone et montée entre le cylindre du vérin, solidaire du support, et ledit piston susceptible d'agir contre les disques en métal ; et,
- un organe thermique de sécurité lié à l'extrémité de la chemise, opposée à son fond, et entourant ledit piston, ledit organe thermique maintenant en butée ladite chemise vers les disques en carbone tant que la température des disques en métal est inférieure à une température de surchauffe desdits disques, et libérant, par sa fusion, ladite chemise qui agit, sous l'action du fluide hydraulique alimentant les vérins, contre les disques en carbone, lorsque la température de surchauffe des disques en métal est atteinte. Ainsi, chaque vérin est du type à double piston à action opposée, dont chacun fonctionne selon l'état de l'organe thermique. Plus particulièrement, ledit organe thermique de sécurité est défini par un anneau réalisé en une matière telle que sa fusion intervienne dès que les disques métalliques ont atteint la température de surchauffe déterminée.

Aussi, une enveloppe, réalisée en une matière conductrice de la chaleur, entoure la partie avant de chaque piston tournée vers les disques métalliques, ledit organe thermique s'appliquant autour de ladite enveloppe, et une enveloppe intermédiaire, réalisée en une matière isolante, est interposée entre ladite partie avant de chaque piston et ladite enveloppe conductrice de la chaleur. Cet agencement évite les déperditions de chaleur vers le piston. Les deux enveloppes superposées sont alors fixées à la partie avant du piston au moyen d'une vis ou analogue.

Par ailleurs, chaque cylindre de vérin fait avantageusement partie intégrante dudit support.

Les figures du dessin annexé feront bien comprendre comment l'invention peut être réalisée. Sur ces figures, des références identiques désignent des éléments semblables.

La figure 1 représente un schéma synoptique d'un système de freinage pour véhicule ferroviaire, comportant notamment le dispositif à disques multiples de l'invention.

La figure 2 est une vue en coupe d'un exemple de réalisation du dispositif de freinage à disques multiples de l'invention.

La figure 3 est une coupe axiale d'un des vérins des premiers moyens de pression, susceptible d'agir à l'encontre des deux ensembles de disques en fonction de l'état d'un organe thermique de sécurité, ledit vérin étant dans une position inactive.

La figure 4 représente partiellement une vue en bout dudit vérin selon la flèche F de la figure 3.

La figure 5 montre ledit vérin illustré sur la figure 3 dans la position sortie du piston agissant contre les disques en métal.

La figure 6 montre ledit vérin illustré sur la figure 3, dans la position sortie de la chemise intermédiaire agissant contre les disques en carbone, après la fusion dudit organe thermique.

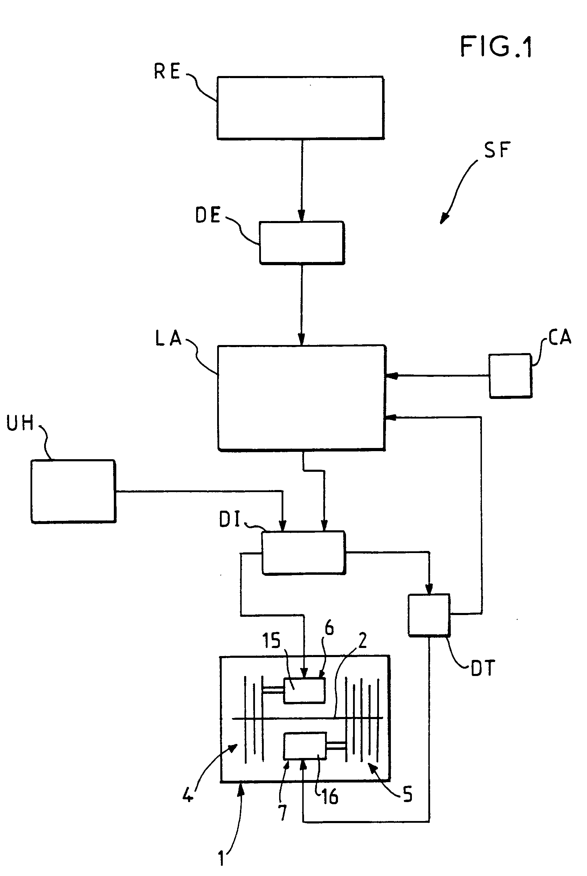

Le système de freinage SF montré schématiquement sur la figure 1 comprend, dans l'application à un véhicule ferroviaire, un ralentisseur électrique RE auquel sont avantageusement reliés, par mesure de sécurité, des moyens pour détecter une éventuelle anomalie de son fonctionnement, tels qu'un détecteur DE. Ce dernier est associé à une logique d'asservissement LA du système de freinage, qui commande, par exemple, un distributeur électro-hydraulique DI, alimenté en fluide par une unité hydraulique UH et relié au dispositif de freinage 1 à disques multiples de l'invention. Comme expliqué préalablement, le ralentisseur électrique RE, lorsqu'il est actionné, a pour but de ralentir le train jusqu'à une vitesse limite VL imposée, relativement basse à partir de laquelle, grâce à des moyens de déclenchement, tels qu'un capteur de vitesse CA, reliés à la logique d'asservissement LA, le dispositif de freinage 1 est alors sollicité, par le distributeur DI, pour freiner le train jusqu'à son arrêt.

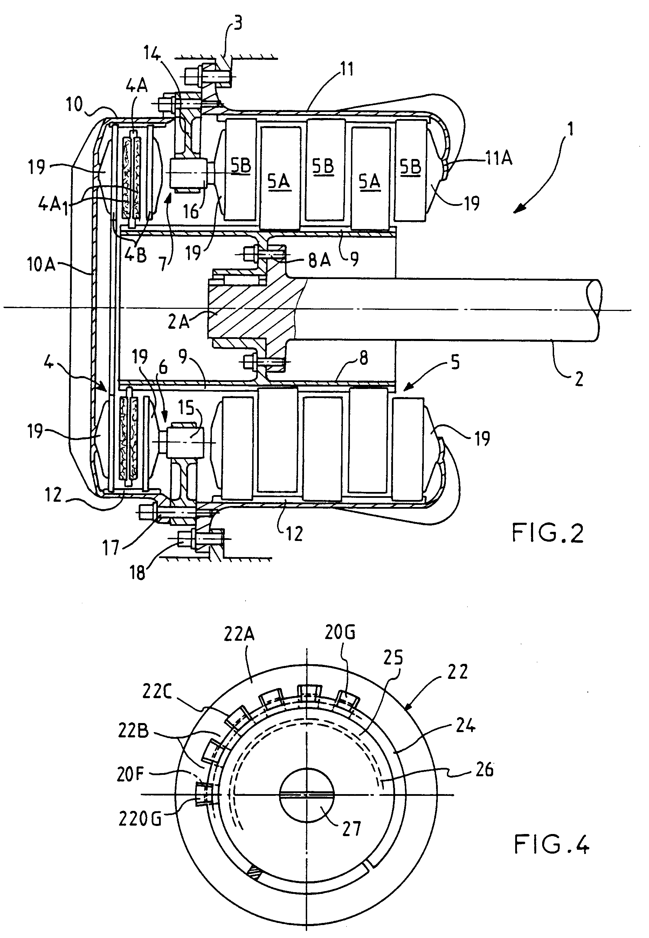

Plus particulièrement, le dispositif de freinage 1 montré sur la figure 2 est agencé entre un élément rotatif à freiner, tel qu'un arbre 2 relié mécaniquement et de façon solidaire aux roues, et un élément fixe, tel que la structure 3 du bogie correspondant. Selon l'invention, le dispositif 1 comprend par exemple un premier ensemble de disques 4 réalisés en une matière métallique et un second ensemble de disques 5 réalisés en carbone, des premiers et des seconds moyens de pression 6 et 7 étant susceptibles d'agir respectivement sur les premier et second ensembles de disques 4 et 5.

On comprend donc que, lorsque le ralentisseur électrique RE est en état de marche, les premiers moyens de pression 6, par l'intermédiaire de la logique d'asservissement LA et du distributeur DI, agissent sur le premier ensemble de disques métalliques 4, dès que le train, freiné par le ralentisseur, atteint la vitesse limitée imposée VL délivrée par le capteur CA. Le second ensemble de disques en carbone 5 reste alors inactif. En revanche, dans le cas d'une panne du ralentisseur électrique, alors que le train roule à une vitesse supérieure à la vitesse limite VL, les seconds moyens de pression 7, commandés par le détecteur DE relevant le dysfonctionnement du ralentisseur, la logique d'asservissement LA et le distributeur DI, agissent immédiatement sur le second ensemble de disques en carbone 5. Ces derniers, grâce à leurs caractéristiques structurelles, assurent alors le freinage fiable et efficace du train jusqu'à son arrêt. On peut également prévoir que, aussitôt que le train a atteint la vitesse limite VL grâce à l'action des disques en carbone, les disques métalliques 4 entrent en action.

De façon connue, les disques desdits ensembles sont définis par des stators et des rotors qui, dans ce mode de réalisation, sont alternativement reliés à l'arbre rotatif 2 et à la structure fixe 3. Plus particulièrement, le premier ensemble de disques métalliques 4 comprend un rotor 4A et deux stators 4B, tandis que le second ensemble de disques en carbone 5 comprend deux rotors 5A et trois stators 5B. Aussi, les rotors 4A et 5A sont montés sur un même moyeu 8 solidaire de l'extrémité 2A de l'arbre 2 par des vis 8A, lesdits rotors étant usuellement liés en rotation au moyeu 8 et pouvant coulisser axialement par rapport à celui-ci par un montage classique à clavettes 9 prévus sur le moyeu. En revanche, les stators 4B et 5B sont montés à l'intérieur de carters respectifs 10 et 11, lesdits stators étant fixes en rotation par rapport aux carters et pouvant coulisser axialement grâce à un montage par clavettes 12 prévues à la périphérie interne de chaque carter.

Le nombre de disques en carbone ou en métal pourrait être différent. Les seuls éléments à respecter sont, d'une part, la masse totale des disques de carbone ou métalliques compte tenu de leurs réfractairités, chaleurs spécifiques et énergies cinétiques respectives à absorber et, d'autre part, la nécessité d'exercer un couple total de freinage suffisant avec l'ensemble des disques de chaque sorte, compte tenu des forces exercées par les moyens de pression, des coefficients de frottement respectifs et du nombre de disques de chaque sorte. On remarque par ailleurs que le rotor 4A est par exemple recouvert sur ses deux faces de garnitures de friction 4A₁ réalisées en céramique ou différemment et contre lesquelles s'appliquent les stators 4B en métal.

Comme le montre la figure 2, les premiers 6 et seconds 7 moyens de pression sont montés sur un même support 14 solidaire de la structure fixe 3 et disposé, par conséquent, entre les deux ensembles de disques 4 et 5. Ces moyens de pression sont usuellement constitués par deux groupes de vérins 15 et 16 susceptibles d'agir respectivement contre les premier et second ensembles 4 et 5.

Comme on le verra ultérieurement, les disques en métal 4 sont avantageusement situés du côté externe de l'extrémité 2A de l'arbre rotatif, c'est-à-dire, sur la figure 2, à la gauche du support 14. Le carter 10, à l'intérieur duquel sont logés ces disques 4, est fixé, dans ce mode de réalisation, par des vis 17 au support 14 et au carter 11, tandis que ce dernier, à l'intérieur duquel sont agencés les disques 5, est alors rendu solidaire de la structure fixe 3 du bogie par des vis 18.

Par ailleurs, les vérins 15 et les vérins 16 desdits moyens de pression sont disposés alternativement et de façon équiangulairement répartie par rapport au support 14. Le nombre de vérins 15 et 16 de chaque groupe peut être par exemple compris entre cinq et huit. Aussi, on voit sur la figure 2 qu'aux vérins 15 et 16 sont associées, de façon connue, des plaques métalliques 19, ainsi que dans le fond 10A du carter 10 et que dans le fond ouvert 11A du carter 11. De la sorte, lorsque les vérins 15 ou 16 agissent, les plaques de pression 19, respectivement disposées de part et d'autre de chaque ensemble 4 et 5, pressent les stators et les rotors les uns contre les autres.

Grâce au fait que les premier et second ensembles de disques 4 et 5 sont chacun commandés par un groupe de vérins 15 ou 16, on peut, pour accroître la sécurité du dispositif 1, utiliser les vérins 15 des premiers moyens de pression 6 pour agir avantageusement sur le second ensemble de disques en carbone 5, en cas notamment d'une défaillance des seconds moyens de pression 7 ou du circuit hydraulique les alimentant. Par exemple, cette défaillance peut être relevée par un détecteur DT prévu sur la liaison hydraulique entre le distributeur DI et les seconds moyens 7 (figure 1), et relié à la logique d'asservissement LA.

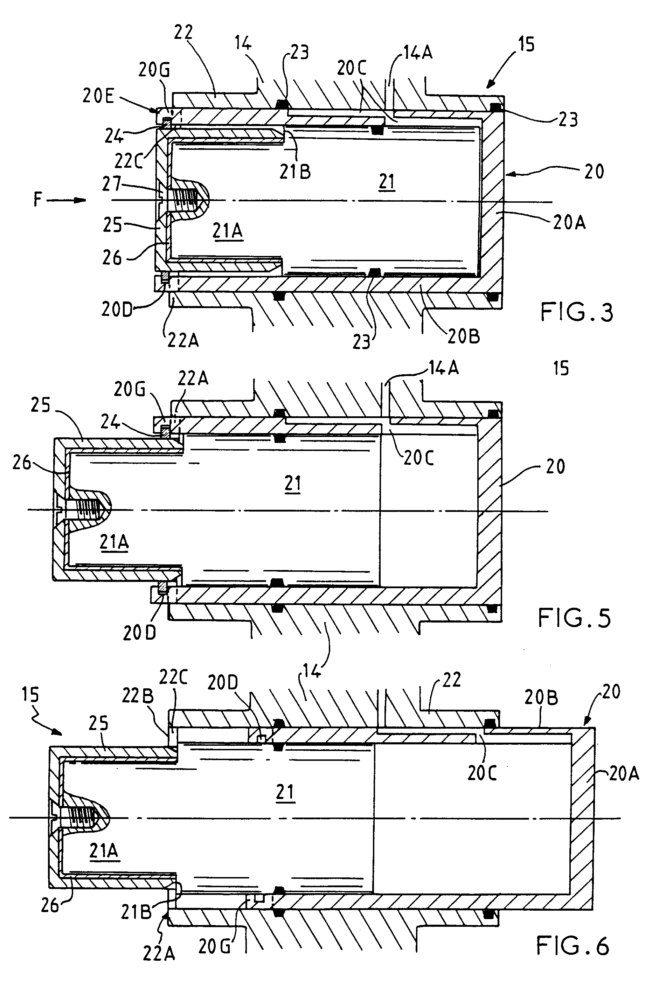

Pour cela, en se référant aux figures 3 et 4, chaque vérin 15 est pourvu d'une chemise intermédiaire 20 disposée entre le piston 21, susceptible d'agir contre les disques métalliques 4 par la plaque de pression 19, et le cylindre 22 qui avantageusement fait partie intégrante, dans ce mode de réalisation, du support 14. Cette chemise 20, ayant la forme d'un piston, est montée tête-bêche sur le piston 21, c'est-à-dire que son fond 20A est alors destiné à s'appliquer, comme on le verra ultérieurement, contre les disques en carbone 5. Des bagues 23 assurent l'étanchéité entre la paroi latérale 20B de la chemise intermédiaire 20 et le cylindre 22, ainsi qu'entre cette paroi 20B et le piston 21. On a par ailleurs illustré une canalisation 14A, prévue dans le support et relative au circuit hydraulique des vérins, ainsi que des passages 20C ménagés dans la paroi latérale 20B de la chemise et mettant en communication la canalisation 14A du circuit hydraulique avec l'arrière du piston 21.

Avantageusement, les vérins 15 sont respectivement équipés d'organes thermiques ou fusibles de sécurité 24 qui, d'une part, maintiennent en position les chemises intermédiaires 20 par rapport aux cylindres 22 lorsque le freinage du train se déroule normalement, et d'autre part autorise, grâce à leur fusion provoquée par une surchauffe des disques métalliques 4, le coulissement des chemises 20 en direction des disques en carbone 5 au moyen de la pression hydraulique du circuit d'alimentation. Une telle surchauffe peut, par exemple, se produire à la suite d'une défaillance du circuit hydraulique alimentant les vérins 16 des disques en carbone 5 lesquels doivent être actionnés lors d'une panne du ralentisseur. Dans un tel cas, la défaillance est signalée par le détecteur DT, relié à la logique de fonctionnement LA du système de freinage SF, laquelle annule la commande des vérins 15 des disques métalliques à la vitesse limite imposée VL pour l'autoriser à fonctionner au-delà de cette vitesse. De la sorte, à cause de l'énergie considérable à absorber, les disques métalliques 4 atteignent rapidement des températures élevées qui provoquent la fusion des organes thermiques de sécurité 24 et, par conséquent, l'action des chemises intermédiaires 20 sur les disques en carbone 5 autorisant alors l'arrêt du train.

Pour cela, chaque organe 24 est constitué par un anneau fendu réalisé en une matière dont le point de fusion correspond à une température déterminée de surchauffe des disques 4, pour laquelle on souhaite que le freinage des disques en carbone 5 par les vérins 15 intervienne, dans le cas d'une anomalie de fonctionnement du circuit hydraulique des disques en carbone. Par exemple, l'anneau 24 peut être réalisé en alliage léger.

Structurellement, l'anneau 24 est engagé dans une gorge périphérique interne 20D, prévue dans la paroi latérale 20B de la chemise, au voisinage de son extrémité 20E opposée au fond, et il fait saillie de la gorge 20D pour s'appliquer, grâce à son élasticité intrinsèque, contre et autour d'une enveloppe 25 entourant la partie avant 21A du piston 21, laquelle est délimitée par un épaulement 21B. Cette enveloppe 25, qui a la forme d'un piston creux, est réalisée en une matière conductrice de la chaleur telle que le cuivre, de sorte que l'action des disques métalliques lors d'un freinage se traduit par une élévation de la température de l'enveloppe 25 et donc de l'anneau fendu 24 qui se presse autour. Aussi, pour éviter des déperditions de chaleur vers le piston 21, une enveloppe intermédiaire isolante 26, réalisée en une matière réfractaire, est interposée entre la partie avant 21A du piston 21 et l'enveloppe conductrice de la chaleur 25. Les deux enveloppes 25 et 26 superposées sont fixées à la partie avant 21A du piston par une vis 27 comme le montrent les figures 3 et 4.

En se référant à ces figures, on remarque par ailleurs que la chemise intermédiaire 20 est maintenue axialement en position par rapport au cylindre 22. Le déplacement de la chemise 20 vers les disques en métal 4 est rendu impossible en raison d'une liaison par emboîtement entre la chemise 20 et le cylindre 22. Ce dernier est pourvu d'un rebord transversal crénelé 22A, s'engageant et traversant l'extrémité 20E de la chemise, qui est également crénelée. Ainsi, les dents 22B du rebord traversent les espaces 20F de l'extrémité crénelée 20E de la chemise et elles viennent à fleur de l'enveloppe 25 ; inversement, les espaces 22C dudit rebord 22A reçoivent les dents 20G de l'extrémité 20E de la chemise. Le déplacement de celle-ci vers les disques en carbone 5 est rendu impossible par l'anneau thermique 24 lié à la chemise et s'appliquant contre le rebord crénelé 22A du cylindre fixe 22.

La mise en place de l'anneau thermique fendu 24 est possible en démontant l'enveloppe 25 et en réduisant le diamètre de l'anneau 24 grâce à son jeu circonférentiel, ce qui permet de l'engager dans la gorge périphérique interne 20D lorsque toutes les autres pièces sont dans la position de la figure 3.

La réalisation des premiers moyens de pression sous la forme de vérins à deux pistons permet de garantir le freinage du véhicule ferroviaire à la suite d'une défaillance des seconds moyens de pression. Les vérins 15 du dispositif de freinage fonctionnent de la façon suivante.

On rappelle brièvement que, lors d'un fonctionnement normal du ralentisseur électrique RE, les vérins 15 agissent sur les disques en métal 4 à partir de la vitesse limite VL imposée délivrée par le capteur CA, pour laquelle le ralentisseur devient inefficace. Dans ce cas, le fluide hydraulique traverse les passages 20C des chemises et pousse l'ensemble des pistons 21 vers la gauche lesquels, par l'intermédiaire des plaques de pression 19, entraînent le frottement des disques en métal 4 jusqu'à l'arrêt du train.

Lorsque le ralentisseur RE est défaillant, les disques en carbone 5 sous l'action des vérins 16 assurent alors avantageusement le freinage et l'arrêt du véhicule ferroviaire.

En revanche, lorsqu'une panne se produit à la fois sur le ralentisseur et sur les seconds moyens de pression, le freinage du véhicule se déroule grâce à l'action des vérins 15.

Pour cela, le détecteur DT décèle la défaillance des seconds moyens de pression sur le circuit les alimentant, et la logique d'asservissement LA, à laquelle est relié le détecteur, supprime la condition de commande des premiers moyens de pression, c'est-à-dire des vérins 15, à partir du seuil de vitesse limite imposée VL issue du capteur CA.

De la sorte, les vérins 15 sont alimentés par le distributeur DI et les pistons 21 se déplacent pour agir sur les disques en métal, comme le montre la figure 5. Du fait de la quantité d'énergie élevée à absorber pour arrêter le train pouvant rouler à une vitesse élevée, les garnitures 4A₁ des disques 4 s'usent et montent très rapidement en température jusqu'à atteindre une température de surchauffe déterminée, correspondant à la température de fusion des anneaux 24, et transmise par les enveloppes 25. Ainsi, sous l'action de la pression hydraulique s'exerçant aussi bien sur le piston 21 que sur le fond 20A des chemises 20, celles-ci coulissent alors en direction des disques en carbone 5 puisque les anneaux ont fondu. L'agencement des passages 20C, sous forme de rainures latérales, permet le passage du fluide sous pression vers le piston et le fond de la chemise lors du coulissement de celle-ci. On remarque que les enveloppes 25 permettent une propagation rapide de la chaleur en direction des anneaux fusibles 24. La figure 6 montre la position occupée alors par chaque vérin 15 dans un cas extrême où le piston 21 est en butée par l'épaulement 21B contre le rebord crénelé 22A du cylindre, tandis que la chemise 20 est en position sortie maximum. Les pistons 21 des vérins sont de préférence creux permettant de loger, de façon connue, des ressorts de rappel non représentés.

Le dispositif de freinage peut continuer à fonctionner avec les disques en carbone 5. On remarque que, grâce à l'agencement des disques en métal du côté externe de l'arbre 2, le remplacement des disques 4 et des anneaux thermiques 24 des vérins 15 est particulièrement aisé en démontant pour cela le carter 10, très accessible.

## Revendications

1. Dispositif de freinage à disques multiples pour véhicule, notamment ferroviaire, équipé d'un ralentisseur de freinage,
caractérisé en ce qu'il comprend au moins :
- un premier ensemble de disques (4) réalisés en une matière métallique et dont au moins certains sont solidaires en rotation d'un élément rotatif (2) dudit véhicule ;
- des premiers moyens de pression (6) susceptibles d'agir sur le premier ensemble de disques (4), et liés à un élément fixe (3) dudit véhicule ;
- un second ensemble de disques (5) réalisés en carbone et dont au moins certains sont solidaires en rotation dudit élément rotatif ;
- des seconds moyens de pression (7) susceptibles d'agir sur le second ensemble de disques, et liés audit élément fixe du véhicule ;
- des moyens (CA,LA,DI,...) pour commander l'actionnement desdits premiers moyens de pression (6) dès que le véhicule, freiné par le ralentisseur, atteint une vitesse limite imposée ; et,
- des moyens (DE) pour détecter une anomalie de fonctionnement dudit ralentisseur et solliciter les seconds moyens de pression (7).

2. Dispositif selon la revendication 1,
caractérisé en ce que la masse totale des disques métalliques (4) dudit premier ensemble est très inférieure à la masse totale des disques en carbone (5) dudit second ensemble.

3. Dispositif selon l'une des revendications 1 ou 2,
caractérisé en ce que lesdits premiers et seconds moyens de pression (6,7) sont montés sur un même support (14) solidaire dudit élément fixe (3).

4. Dispositif selon la revendication 3,
caractérisé en ce que lesdits premier et second ensembles de disques (4,5) sont respectivement disposés de part et d'autre dudit support (14).

5. Dispositif selon l'une quelconque des revendications 1 à 4,
caractérisé en ce que les disques (4,5) de chaque ensemble sont liés alternativement à l'élément rotatif (2) et à l'élément fixe (3) et sont susceptibles, sous l'action de leurs moyens de pression respectifs, de coulisser axialement pour s'appliquer les uns contre les autres.

6. Dispositif selon l'une des revendications 1 à 5,
caractérisé en ce que lesdits premier et second ensembles de disques sont logés dans des carters respectifs (10,11) reliés audit élément fixe, et en ce que lesdits disques des premier et second ensembles sont axialement montés sur des clavettes (9,12) respectivement prévues sur les carters (10,11) solidaires de l'élément fixe et sur un moyeu solidaire dudit élément rotatif.

7. Dispositif selon la revendication 6,
caractérisé en ce que les deux carters (10,11) sont fixés respectivement de part et d'autre dudit support (14) des premiers et seconds moyens de pression (6,7), ledit carter (11) du second ensemble de disques en carbone (5) étant solidaire dudit élément fixe (3) et étant traversé par l'élément rotatif (2), contrairement audit carter (10) du premier ensemble de disques métalliques (4).

8. Dispositif selon l'une quelconque des revendications précédentes 1 à 7,
caractérisé en ce que lesdits premiers et seconds moyens de pression (6,7) sont définis par des vérins (15,16) dont les pistons sont susceptibles d'agir respectivement sur les premier et second ensembles de disques (4,5).

9. Dispositif selon la revendication 8,
caractérisé en ce que lesdits vérins (15,16) sont alternativement et équi-angulairement répartis par rapport audit support (14).

10. Dispositif selon l'une quelconque des revendications précédentes 1 à 9,
caractérisé en ce que lesdits premiers moyens de pression (6) sont susceptibles d'agir sur le second ensemble de disques en carbone (5) en cas de défaillance de fonctionnement desdits seconds moyens de pression (7), des moyens de détection (DT) étant prévus pour déceler ladite défaillance et autoriser la commande desdits premiers moyens de pression à une vitesse supérieure à la vitesse limite imposée.

11. Dispositif selon la revendication 10,
caractérisé en ce que chaque vérin (15) desdits premiers moyens de pression (6) comprend :
- une chemise intermédiaire (20), en forme de piston, susceptible d'agir contre les disques en carbone (5) et montée entre le cylindre (22) du vérin, solidaire du support, et ledit piston (21) susceptible d'agir contre les disques en métal (4) ; et,
- un organe thermique de sécurité (24) lié à l'extrémité de la chemise (20), opposée à son fond, et entourant ledit piston (21), ledit organe thermique (24) maintenant en butée ladite chemise (20) vers les disques en carbone tant que la température des disques en métal (4) est inférieure à une température de surchauffe desdits disques, et libérant, par sa fusion, ladite chemise (20) qui agit, sous l'action du fluide hydraulique alimentant les vérins, contre les disques en carbone (5), lorsque la température de surchauffe des disques en métal (4) est atteinte.

12. Dispositif selon la revendication 11,
caractérisé en ce que ledit organe thermique de sécurité (24) est défini par un anneau, réalisé en une matière telle que sa fusion intervienne dès que les disques métalliques ont atteint la température de surchauffe déterminée.

13. Dispositif selon l'une des revendications 11 ou 12,
caractérisé en ce qu'une enveloppe (25), réalisée en une matière conductrice de la chaleur, entoure la partie avant (21A) de chaque piston (21) tournée vers les disques métalliques, ledit organe thermique (24) s'appliquant autour de ladite enveloppe (25), et en ce qu'une enveloppe intermédiaire (26), réalisée en une matière isolante, est interposée entre ladite partie avant (21A) de chaque piston et ladite enveloppe conductrice de la chaleur (25).

14. Dispositif selon la revendication 13,
caractérisé en ce que les deux enveloppes superposées sont fixées à la partie avant dudit piston par au moins une vis (27).

15. Dispositif selon l'une des revendications 11 à 14,
caractérisé en ce que chaque cylindre (22) de vérin fait partie intégrante dudit support (14).

## Claims

1. Multi-disc braking device for a vehicle, especially a railroad vehicle, equipped with a braking retarder, characterized in that it comprises at least:
- a first set of discs (4) made from a metallic material and of which at least some are integrally connected, in terms of rotation, to a rotary element (2) of said vehicle;
- first pressure means (6) capable of acting on the first set of discs (4) and joined to a stationary element (3) of said vehicle;
- a second set of discs (5) made from carbon and of which at least some are integrally connected, in terms of rotation, to said rotary element;
- second pressure means (7) capable of acting on the second set of discs and joined to said stationary element of the vehicle;
- means (CA, LA, DI etc.) for controlling the actuation of said first pressure means (6) as soon as the vehicle, braked by the retarder, reaches a prescribed limiting speed; and
- means (DE) for detecting an operational anomaly of said retarder and applying the second pressure means (7).

2. Device according to Claim 1, characterized in that the total weight of the metallic discs (4) of said first set is very much less than the total weight of the carbon discs (5) of said second set.

3. Device according to either of Claims 1 or 2, characterized in that said first and second pressure means (6, 7) are mounted on one and the same support (14) integrally connected to said stationary element (3).

4. Device according to Claim 3, characterized in that said first and second sets of discs (4, 5) are respectively disposed on each side of said support (14).

5. Device according to any one of Claims 1 to 4, characterized in that the discs (4, 5) of each set are alternately joined to the rotary element (2) and to the stationary element (3) and are capable, under the action of their respective pressure means, of sliding axially in order to be applied against each other.

6. Device according to any one of Claims 1 to 5, characterized in that said first and second sets of discs are housed in respective housings (10, 11) connected to said stationary element, and in that said discs of the first and second sets are axially mounted on keys (9, 12) respectively provided on the housings (10, 11) integrally connected to the stationary element and on a hub integrally connected to said rotary element.

7. Device according to Claim 6, characterized in that the two housings (10, 11) are respectively fixed on each side of said support (14) of the first and second pressure means (6, 7), said housing (11) of the second set of carbon discs (5) being integrally connected to said stationary element (3) and being traversed by the rotary element (2), in contrast to said housing (10) of the first set of metallic discs (4).

8. Device according to any one of the preceding Claims 1 to 7, characterized in that said first and second pressure means (6, 7) are defined by thrust devices (15, 16) whose pistons are capable of acting respectively on the first and second sets of discs (4, 5).

9. Device according to Claim 8, characterized in that said thrust devices (15, 16) are alternately and equi-angularly distributed in relation to said support (14).

10. Device according to any one of the preceding Claims 1 to 9, characterized in that said first pressure means (6) are capable of acting on the second set of carbon discs (5) should said second pressure means (7) fail operationally, detection means (DT) being provided in order to detect said failure and to allow the actuation of said first pressure means at a speed greater than the prescribed limiting speed.

11. Device according to Claim 10, characterized in that each thrust device (15) of said first pressure means (6) comprises:
- a piston-shaped intermediate jacket (20) capable of acting against the carbon discs (5) and mounted between the cylinder (22) of the thrust device, which is integrally connected to the support, and said piston (21) capable of acting against the metal discs (4); and
- a thermal safety member (24) joined to the end of the jacket (20), opposite its end-part, and surrounding said piston (21), said thermal member (24) keeping said jacket (20) butted up to the carbon discs, as long as the temperature of the metal discs (4) is less than an overheating temperature of said discs, and, by melting, releasing said jacket (20) which acts, under the action of the hydraulic fluid feeding the thrust devices, against the carbon discs (5) when the overheating temperature of the metal discs (4) is reached.

12. Device according to Claim 11, characterized in that said thermal safety member (24) is defined by a ring made from a material which melts as soon as the metallic discs have reached the specified overheating temperature.

13. Device according to one of Claims 11 or 12, characterized in that a casing (25), made from a heat-conducting material, surrounds the front portion (21A) of each piston (21), which portion is turned towards the metallic discs, said thermal member (24) being applied around said casing (25) and in that an intermediate casing (26), made from an insulating material, is interposed between said front portion (21A) of each piston and said heat-conducting casing (25).

14. Device according to Claim 13, characterized in that the two superposed casings are fixed to the front portion of said piston by means of at least one screw (27).

15. Device according to one of Claims 11 to 14, characterized in that each thrust device cylinder (22) forms an integral part of said support (14).

## Patentansprüche

1. Lamellenbremsvorrichtung für Fahrzeuge, insbesondere Eisenbahnfahrzeuge, die mit einem Bremsverzögerer ausgerüstet sind, dadurch gekennzeichnet, daß sie mindestens umfaßt:
- eine erste Gruppe von Scheiben (4) aus einem metallischen Werkstoff, von denen mindestens einige bei Drehung mit einem Drehteil (2) des Fahrzeugs verbunden sind;
- erste Anpreßmittel (6), die auf die erste Scheibengruppe (4) einwirken können und mit einem feststehenden Teil (3) des Fahrzeugs verbunden sind;
- eine zweite Gruppe von Kohlescheiben (5), von denen mindestens einige bei Drehung mit dem Drehteil verbunden sind;
- zweite Anpreßmittel (7), die auf die zweite Scheibengruppe einwirken können und mit dem feststehenden Teil des Fahrzeugs verbunden sind;
- Mittel (CA,LA,DI usw.) zur Steuerung der Betätigung der ersten Anpreßmittel (6), sobald das vom Bremsverzögerer abgebremste Fahrzeug eine vorgegebene Grenzgeschwindigkeit erreicht, und
- Mittel (DE) zum Nachweis einer Betriebsstörung des Bremsverzögerers, durch die die zweiten Anpreßmittel (7) in Betrieb genommen werden können.

2. Vorrichtung nach Anspruch 1,
dadurch gekennzeichnet, daß die Gesamtmasse der Metallscheiben (4) der ersten Gruppe wesentlich kleiner als die Gesamtmasse der Kohlescheiben (5) der zweiten Gruppe ist.

3. Vorrichtung nach einem der Ansprüche 1 oder 2,
dadurch gekennzeichnet, daß die ersten und zweiten Anpreßmittel (6,7) am gleichen Träger (14) angebracht sind, der mit dem feststehenden Teil (3) verbunden ist.

4. Vorrichtung nach Anspruch 3,
dadurch gekennzeichnet, daß die erste und zweite Scheibengruppe (4,5) jeweils beiderseits des Trägers (14) angeordnet sind.

5. Vorrichtung nach einem der Ansprüche 1 bis 4,
dadurch gekennzeichnet, daß die Scheiben (4,5) jeder Gruppe abwechselnd mit dem Drehteil (2) und dem feststehenden Teil (3) verbunden sind und daß sie sich durch ihre entsprechenden Anpreßmittel axial verschieben und aneinander anlegen können.

6. Vorrichtung nach einem der Ansprüche 1 bis 5,
dadurch gekennzeichnet, daß sich die erste und zweite Scheibengruppe in entsprechenden Gehäusen (10,11) befinden, die mit dem feststehenden Element verbunden sind, und dadurch, daß die Scheiben der ersten und zweiten Gruppe axial an Keilen (9,12) angebracht sind, die jeweils in den mit dem feststehenden Teil verbundenen Gehäusen (10,11) und an einer mit dem Drehteil verbundenen Nabe vorgesehen sind.

7. Vorrichtung nach Anspruch 6,
dadurch gekennzeichnet, daß die beiden Gehäuse (10,11) jeweils beiderseits des Trägers (14) der ersten und zweiten Anpreßmittel (6,7) befestigt sind, wobei das Gehäuse (11) der zweiten Kohlescheibengruppe (5) mit dem feststehenden Teil (3) verbunden ist und in ihm im Gegensatz zu Gehäuse (10) der ersten Metallscheibengruppe (4) das Drehteil (2) verläuft.

8. Vorrichtung nach einem der obigen Ansprüche 1 bis 7,
dadurch gekennzeichnet, daß die ersten und zweiten Anpreßmittel (6,7) aus Zylindern (15,16) bestehen, deren Kolben jeweils auf die erste und zweite Scheibengruppe (4,5) einwirken können.

9. Vorrichtung nach Anspruch 8,
dadurch gekennzeichnet, daß die Zylinder (15,16) abwechselnd und gleichwinklig gegenüber dem Träger (14) verteilt sind.

10. Vorrichtung nach einem der obigen Ansprüche 1 bis 9,
dadurch gekennzeichnet, daß die ersten Anpreßmittel (6) bei einer Funktionsstörung der zweiten Anpreßmittel (7) auf die zweite Kohlescheibengruppe (5) einwirken können, wobei Detektoren (DT) vorgesehen sind, die den Ausfall nachweisen und bei einer Geschwindigkeit größer als die vorgegebene Grenzgeschwindigkeit die Steuerung der ersten Anpreßmittel zulassen.

11. Vorrichtung nach Anspruch 10,
dadurch gekennzeichnet, daß jeder Zylinder (15) der ersten Anpreßmittel (6) umfaßt:
- einen kolbenförmigen Zwischenmantel (20), der gegen die Kohlescheiben (5) wirken kann und zwischen dem Zylinderelement (22) des Zylinders, das mit dem Träger verbunden ist, und dem Kolben (21) angeordnet ist, der gegen die Metallscheiben (4) wirken kann, und
- ein thermisches Sicherheitsorgan (24), das mit dem Ende des Mantels (20), das dessen Boden entgegengesetzt ist, verbunden ist und den Kolben (21) umgibt, wobei das thermische Sicherheitsorgan (24) den Mantel (20) so lange am Anschlag in Richtung Kohlescheiben hält, wie die Temperatur der Metallscheiben (4) niedriger als eine Überhitzungstemperatur der Scheiben ist, und beim Schmelzen den Mantel (20) freigibt, der unter dem Einfluß der Hydraulikflüssigkeit in den Zylindern gegen die Kohlescheiben (5) wirkt, wenn die Überhitzungstemperatur der Metallscheiben (4) erreicht ist.

12. Vorrichtung nach Anspruch 11,
dadurch gekennzeichnet, daß das thermische Sicherheitsorgan (24) aus einem Ring besteht, dessen Werkstoff zu schmelzen beginnt, sobald die Metallscheiben die bestimmte Überhitzungstemperatur erreicht haben.

13. Vorrichtung nach einem der Ansprüche 11 oder 12,
dadurch gekennzeichnet, daß eine Verkleidung (25) aus einem wärmeleitenden Werkstoff den den Metallscheiben zugewandten vorderen Teil (21A) jedes Kolbens (21) umgibt, wobei sich das thermische Sicherheitsorgan (24) um die Verkleidung (25) legt, und dadurch, daß eine Zwischenverkleidung (26) aus einem Isolierstoff zwischen dem vorderen Teil (21A) jedes Kolbens und der wärmeleitenden Verkleidung (25) angebracht ist.

14. Vorrichtung nach Anspruch 13,
dadurch gekennzeichnet, daß die beiden übereinanderliegenden Verkleidungen am vorderen Teil des Kolbens mit mindestens einer Schraube (27) befestigt sind.

15. Vorrichtung nach einem der Ansprüche 11 bis 14,
dadurch gekennzeichnet, daß jedes Zylinderelement (22) Bestandteil des Trägers (14) ist.
